# EUROPEAN PATENT APPLICATION

(11) **EP 4 350 149 A1**
(43) Date of publication of application: **10.04.2024**
(21) Application number: 23201021.5
(22) Date of filing: 29.09.2023
(51) Int. Cl.: F04D 29/02, F04D 29/26, F04D 29/28, B33Y 80/00

(54) **IMPELLER WITH PRELOADING BANDS**

(30) Priority: 07.10.2022 US 202217962174
(71) Applicant: Hamilton Sundstrand Corporation, Charlotte, NC 28217-4578 (US)
(72) Inventor: KILCHYK, Viktor, Lancaster, NY (US); MERRITT, Brent J., Southwick, MA (US)
(74) Representative: Dehns

(57) **Abstract**

An impeller (112) includes a hub (130). The hub (130) has a first end and a second end and includes an impeller disk (144) at the second end of the hub. The impeller disk (144) includes a first annular protrusion (146) extending from the impeller disk (144). A first pocket (148) is in a radially outer side of the first annular protrusion (146). The impeller (112) also includes a first preloading band (114) positioned in the first pocket (148). The first preloading band (114) encircles the radially outer side of the first annular protrusion (146). The impeller (112) also includes blades (140) connecting to a radially outer surface of the hub (130).

## Description

### BACKGROUND

This disclosure relates to impellers for rotary machines and, more specifically, preloading bands that place elastic force on impellers.

Rotary machines, like compressors, turbines, and blowers, include impellers which spin at high rates when the rotary machine is in operation. Impellers have a curved shape to help increase or decrease angular velocity as fluid moves through them. Impellers are asymmetrical along an axis of rotation and therefore deform axially when rotating. Axial deformation reduces efficiency of rotary machines with impellers.

Thick and heavy metal walls in impeller hubs are typically used to reduce axial deformations. Metal in a middle of the hub supports a disk at a back of the hub to support a radially outer edge of an impeller and reduce deformation. However, rotary machines utilized in aircraft benefit from reduced weight. Heavy impellers increase the weight of rotary machines and require more containment, which also increases the weight of rotary machines.

### SUMMARY

An impeller includes a hub. The hub has a first end and a second end and includes an impeller disk at the second end of the hub. The impeller disk includes a first annular protrusion extending from the impeller disk. A first pocket is in a radially outer side of the first annular protrusion. The impeller also includes a first preloading band positioned in the first pocket. The first preloading band encircles the radially outer side of the first annular protrusion. The impeller also includes blades connecting to a radially outer surface of the hub.

A rotary machine includes a housing, an impeller, a shroud, and a shaft. The housing includes an inlet, an outlet, and a duct connecting the inlet and the outlet. The impeller is within the duct. The impeller includes a hub, a first preloading band, and blades. The hub includes a first end and a second end. The hub includes an impeller disk at the second end of the hub. The impeller disk has a first annular protrusion extending from the impeller disk and a first pocket in a radially outer side of the first annular protrusion. The first preloading band is positioned in the first pocket and encircling the radially outer side of the first annular protrusion. The blades connected to a radially outer surface of the hub. The shroud is between the impeller and the housing. The shaft attaches to the impeller at the first end of the hub. The impeller rotates with the shaft.

### BRIEF DESCRIPTION OF THE DRAWINGS

FIG. 1 is a cross sectional view of a prior art air cycle machine.
FIG. 2 is a cut away cross-sectional view of a prior art compressor impeller in the air cycle machine of FIG. 1.
FIG. 3 is a cut away cross-sectional view of a rotary machine with an impeller having a first preloading band and a second preloading band.
FIG. 4 is a cut away cross-sectional view of a rotary machine with an impeller having a hollow in a hub of the impeller.

### DETAILED DESCRIPTION

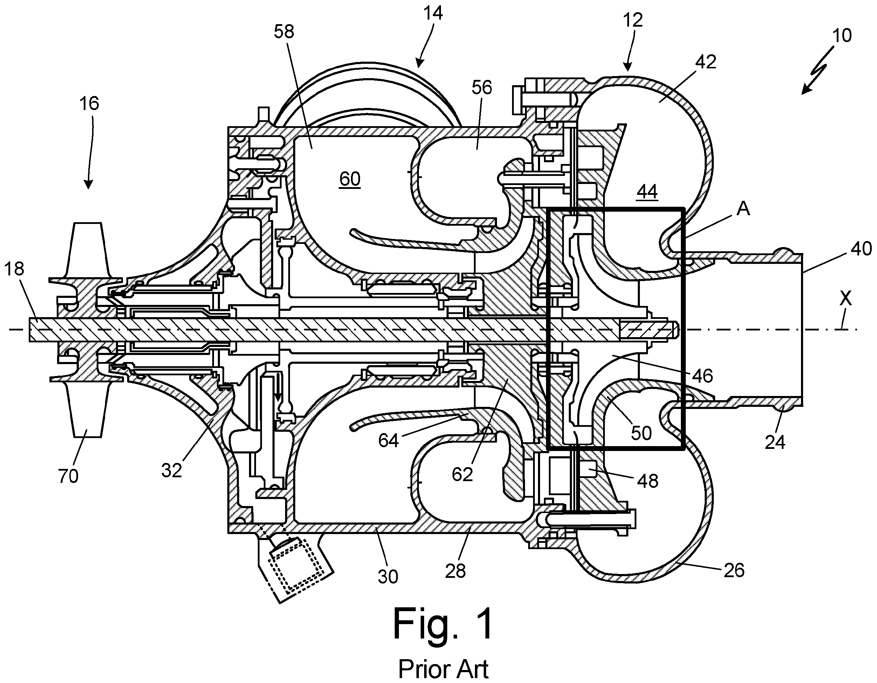

FIG. 1 is a cross-sectional view of prior art air cycle machine 10. Air cycle machine 10 includes compressor section 12, turbine section 14, fan section 16, and shaft 18. Compressor section 12 includes compressor inlet housing 24 and compressor duct housing 26. Turbine section 14 includes turbine inlet housing 28 and turbine duct housing 30. Fan section 16 includes fan housing 32. Compressor section 12 also includes compressor inlet 40, compressor outlet 42, compressor duct 44, compressor impeller 46, diffuser 48, and compressor shroud 50. Turbine section 14 includes turbine inlet 56, turbine outlet 58, turbine duct 60, turbine impeller 62, and turbine shroud 64. Fan section 16 includes blades 70. FIG. 1 also includes axis X and rectangle A.

In air cycle machine 10, compressor section 12, turbine section 14, and fan section 16 are all mounted on shaft 18. Shaft 18 rotates around central axis X. Compressor inlet housing 24 and compressor duct housing 26 are a housing for compressor section 12. Compressor inlet housing 24 and compressor duct housing 26 are an integral piece with compressor inlet housing 24 connected to a first side of compressor duct housing 26. Turbine inlet housing 28 and turbine duct housing 30 are an integral housing for turbine section 14. Turbine inlet housing 28 connects to a second side of compressor duct housing 26. Fan housing 32 connects to turbine duct housing 30 on a side opposite turbine inlet housing 28. Fan housing 32 is a housing for fan section 16.

Compressor section 12 includes compressor inlet 40, compressor outlet 42, compressor duct 44, compressor impeller 46, diffuser 48, and compressor shroud 50. Compressor inlet 40 is an opening in compressor inlet housing 24. Compressor outlet 42 is an opening in compressor duct housing 26. Compressor duct 44 fluidly connects compressor inlet 40 with compressor outlet 42. Compressor impeller 46 is within compressor duct 44 and mechanically connected to shaft 18. Diffuser 48 is within compressor duct 44 and located radially outward from compressor impeller 46. A first portion of compressor shroud 50 connects to a radially inner surface of compressor inlet housing 24. A second portion of compressor shroud 50 connects to diffuser 48. Compressor shroud 50 partially surrounds compressor impeller 46. Rectangle A is positioned around compressor impeller 46.

Turbine section 14 includes turbine inlet 56, turbine outlet 58, turbine duct 60, turbine impeller 62, and turbine shroud 64. Turbine inlet 56 is an opening into turbine inlet housing 28. Turbine outlet 58 is an opening in turbine duct housing 30. Turbine duct 60 fluidly connects turbine inlet 56 with turbine outlet 58. Turbine impeller 62 is within turbine duct 60. Turbine impeller 62 mechanically connects to shaft 18. Turbine shroud 64 connects to turbine inlet housing 28. Turbine shroud 64 is radially outward from and partially surrounds turbine impeller 62. Turbine shroud 64 includes a turbine nozzle towards a downstream portion of turbine shroud 64.

Fan section 16 includes fan blades 70. Fan blade 70 is mounted on shaft 18. Fan blades 70 rotate with shaft 18. Fan section 16 draws in ram air from a ram air scoop or, alternatively, from an associated gas turbine or other aircraft component. Fan section 16 may also be used to draw air through a heat exchanger.

Air is received in air cycle machine 10 at compressor inlet 40. Air sources include ram air, an associated gas turbine engine or another aircraft component. The air passes through compressor section 12 where the air is compressed with compressor impeller 46 and diffuser 48. Compressor outlet 42 discharges the air from compressor section 12. Compressed air can pass through a heat exchanger and be used for other processes on an aircraft. Compressor shroud 50 provides containment in case of catastrophic failure of compressor impeller 46.

Air is routed into turbine inlet 56 from the heat exchanger or other places where compressed air is necessary in an aircraft. The air expands and drives turbine impeller 62 as it passes through turbine section 14. The turbine nozzle on turbine shroud 64 helps decrease the pressure of air moving through turbine shroud 64. Air is discharged out of turbine outlet 58 and can then be routed to other parts of the aircraft, for example, for use as cabin air. Turbine shroud 64 provides containment in case of catastrophic failure of turbine impeller 62.

Compressor shroud 50 and turbine shroud 64 provide containment for compressor impeller 46 and turbine impeller 62, respectively. Containment refers to the ability of a first component to confine a second component upon the second component mechanically failing. Containment is necessary to protect passengers and other aircraft systems from projectile rotary machine components and to comply with aircraft safety regulations. The amount of containment necessary is measured in grams of material. A heavier impeller requires more grams of containment. However, increasing the weight of containment on compressor shroud 50 and turbine shroud 64 make air cycle machine 10 heavier overall and less ideal for use in aircraft.

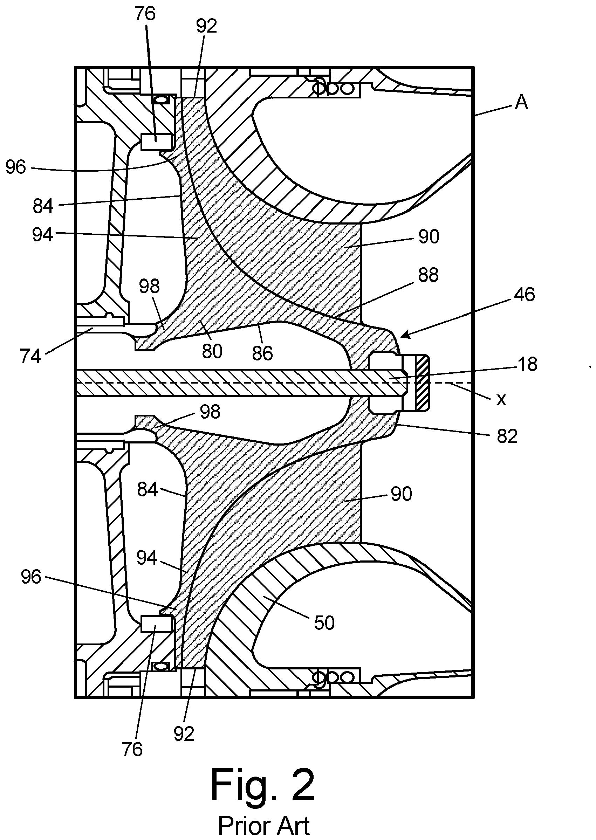

FIG. 2 is a cut away cross-sectional view of prior art compressor impeller 46 in air cycle machine 10 of FIG. 1. FIG. 2 shows compressor impeller 46 and compressor shroud 50 from rectangle A in FIG. 1. FIG. 2 also shows tie rod 74 and journal bearing 76 in air cycle machine 10. Compressor impeller 46 has hub 80 with first side 82, second side 84, radially inner surface 86, and radially outer surface 88. Compressor impeller 46 also has blades 90 with blade tips 92. Hub 80 has impeller disk 94, first annular protrusion 96, and second annular protrusion 98. FIG. 2 also includes axis X.

Compressor impeller 46 is within compressor duct 44 (shown in FIG. 1) and mechanically connected to shaft 18. Shaft 18 is coaxial with and rotates around axis X. Compressor shroud 50 partially surrounds compressor impeller 46. Tie rod 74 connects compressor impeller 46, turbine impeller 62 (shown in FIG. 1), and fan blades 70 (shown in FIG. 1). Tie rod 74 ensures compressor impeller 46, turbine impeller 62, and fan blades 70 all rotate together. Journal bearing 76 is positioned between compressor impeller 46 and compressor duct housing 26 (shown in FIG. 1). Journal bearing 76 allows compressor impeller 46 to move against compressor duct housing 26.

Compressor impeller 46 has hub 80 with a first side 82 mechanically connected to shaft 18. Second side 84 of hub 80 is axially away from first side 82. Radially inner surface 86 of hub 80 faces shaft 18. Radially outer surface 88 of hub 80 is across from radially inner surface 86 of hub 80 and faces shroud 50. Hub 80 is solid between radially inner surface 86, radially outer surface 88, and second side 84. Radially outer surface 88 is a curved surface that is generally parallel to shaft 18 near first side 82 of hub 80. Radially outer surface 88 is generally perpendicular to shaft 18 near second side 84 of hub 80. Blades 90 are attached to radially outer surface 88 of hub 80. Blade tips 92 are at a downstream portion of compressor impeller 46. Blade tips 92 extend axially away from radially outer surface 88 of hub 80 such that blade tips 92 are generally parallel to shaft 18. Impeller disk 94 extends along second side 84 of hub 80 and supports blade tips 92. Impeller disk 94 is generally perpendicular to shaft 18. First annular protrusion 96 extends from impeller disk 94 at second side 84 of hub 80. First annular protrusion 96 is near a radially outer portion of impeller disk 94 and is adjacent to journal bearing 76. Second annular protrusion 98 extends from impeller disk 94 at second side 84 of hub 80. Second annular protrusion 98 is near a radially inner portion of impeller disk 94 and connects to tie rod 74.

Hub 80 supports and rotates blades 90 during operation of air cycle machine 10. First annular protrusion 96 and second annular protrusion 98 provide connection points for compressor impeller 46. Impeller disk 94 supports blade tips 92 while compressor impeller 46 spins. Blade tips 92 deflect axially during rotation of compressor impeller 46 due to centrifugal forces and the curved shape of both radially outer surface 88 of hub 80 and blades 90. Impeller disk 94, and in turn blade tips 92, are supported by the solid structure of hub 80 between radially inner surface 86, radially outer surface 88, and impeller disk 94 at second side 84 of hub 80 . The solid structure of hub 80 increases the weight of compressor impeller 46, which requires shroud 50 to be thick (and therefore heavy) to provide containment for compressor impeller 46. The necessary containment weight in shroud 50 and the weight of compressor impeller 46 increases the weight of air cycle machine 10.

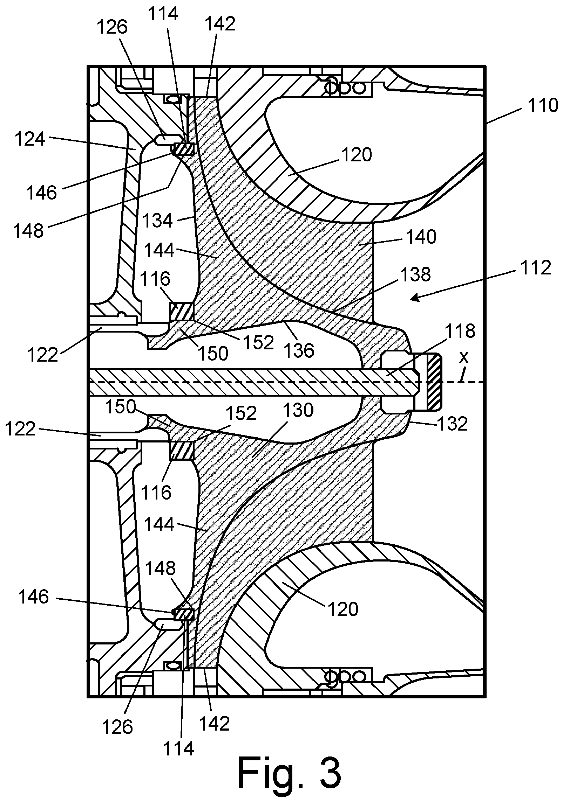

FIG. 3 is a cut away cross-sectional view of rotary machine 110 with impeller 112 having first preloading band 114 and second preloading band 116. Rotary machine 110 also includes shaft 118, shroud 120, tie rod 122, housing 124, and journal bearing 126. Impeller 112 includes hub 130 with first side 132, second side 134, radially inner surface 136, and radially outer surface 138. Impeller 112 also includes blades 140 with blade tips 142. Hub includes impeller disk 144, first annular protrusion 146 with first pocket 148, and second annular protrusion 150 with second pocket 152. FIG. 3 also includes axis X.

Rotary machine 110 is an example rotary machine and could be any rotary machine utilizing an impeller including a compressor (for example, compressor section 12 in FIG. 1), a turbine (for example, turbine section 14 in FIG. 1), or a blower. Impeller 112 is within a duct (for example, compressor duct 44 or turbine duct 60 shown in FIG. 1) and mechanically connected to shaft 118. Shaft 118 is coaxial with and rotates around axis X. Shroud 120 partially surrounds impeller 112. Tie rod 122 connects to impeller 112. Housing 124 (for example, compressor duct housing 26 or turbine duct housing 30) partially surrounds and supports impeller 112, shaft 118, shroud 120, and tie rod 122. Housing 124 also encloses a duct (for example, compressor duct 44 or turbine duct 60 shown in FIG. 1) that impeller 112 and shroud 120 sit within. Journal bearing 126 is between impeller 112 and housing 124.

Impeller 112 includes hub 130 with first side 132 that connects to shaft 118. Second side 134 of hub 130 is axially away from first side 132 and connects to tie rod 122. Radially inner surface 136 of hub 130 faces shaft 118. Radially outer surface 138 is across from radially inner surface 136 of hub 130 and faces shroud 120. Hub 130 is solid between radially inner surface 136, radially outer surface 138, and second side 134. Radially outer surface 138 is a curved surface that is generally parallel to shaft 118 near first side 132 of hub 130 and is generally perpendicular to shaft 118 near second side 134 of hub 130. Blades 140 are attached to radially outer surface 138 of hub 130. Blade tips 142 extend from outer radially surface 138 of hub near second side 134 and are generally parallel to shaft 118. Impeller disk 144 extends along second side 134 of hub 130 and supports blade tips 142. Impeller disk 144 is generally perpendicular to shaft 118. Impeller disk 144 supports blade tips 142.

First annular protrusion 146 extends from impeller disk 144 at second side 134 of hub 130. First annular protrusion 146 is near a radially outer portion of impeller disk 144 and adjacent to journal bearing 126. Fist pocket 148 is a divot with a rectangular cross section in a radially outer surface of first annular protrusion 146. First pocket 148 sits adjacent to impeller disk 144. First preloading band 116 is positioned in first pocket 148 and encircles the radially outer side of first annular protrusion 146. Second annular protrusion 150 extends from impeller disk 144 at second side 134 of hub 130. Second annular protrusion 150 is near a radially inner portion of impeller disk 144 and connects to tie rod 122. Second pocket 152 is a divot with a rectangular cross section in a radially outer side of second annular protrusion 150. Second pocket 152 sits adjacent to impeller disk 144. Second preloading band 118 is positioned in second pocket 152 and encircles the radially outer side of second annular protrusion 150.

Rotary machine 110 works similarly to compressor section 12 or turbine section 14 in air cycle machine 10 (shown in FIG. 1). For example, if rotary machine 110 were a compressor, impeller 112 would be rotated by shaft 118 and tie rod 122 to increase the angular velocity of air moving through rotary machine 110. In another example, if rotary machine 110 were a turbine, air would move through impeller 112 causing rotation that would be transferred to shaft 118 and tie rod 122 to power a different impeller or generate electricity. Shroud 120 guides air flow through impeller 112 and provides containment for impeller 112 if there were a mechanical failure in rotary machine 110. Housing 124 defines a duct (for example, compressor duct 44 or turbine duct 60 shown in FIG. 1) for air to move through rotary machine 110 and supports and houses impeller 112, shaft 118, shroud 120, and tie rod 122. Journal bearing 126 allows impeller 122 to rotate against housing 124.

Hub 130 supports blades 140 during operation of rotary machine 110. Impeller disk 144 supports blade tips 142 while impeller 112 spins. Blade tips 142 try to deflect axially during rotation of impeller 112 due to centrifugal forces and the curved shape of radially outer surface 138 of hub 130. Impeller disk 144, and in turn blade tips 142, are supported by the solid structure of hub 130 between radially inner surface 136, radially outer surface 138, and second side 134 of hub 130 to reduce axial deflections. First annular protrusion 146 and second annular protrusion 150 provide connection points for impeller 112 in rotary machine 110.

First preloading band 114 and second preloading band 116 also help reduce axial deflections in blade tips 142. First preloading band 114 and second preloading band 116 create elastic force against the radially outer side of first annular protrusion 146 and the radially outer side of second annular protrusion 150, respectively. The elastic force created by first preloading band 114 and second preloading band 116 is transferred radially outward through impeller disk 144 to blade tips 142. When impeller 112 spins, the elastic force created by first preloading band 114 and second preloading band 116 counteracts the centrifugal force that causes axial deflection at blade tips 142. First pocket 148 and second pocket 152 hold first preloading band 114 and second preloading band 116 in place, respectively.

In one alternative embodiment, rotor 112 could have one preloading band instead of two. For example, impeller 112 could have first preloading band 114 only. In another example, impeller 112 could have second preloading band 116 only. In another alternative embodiment, rotor 112 could have more than two preloading bands. In another embodiment, rotor 112 could have one annular protrusion and one preloading band only. For example, first annular protrusion 146 could be located anywhere radially along impeller disk 144 and include first pocket 148 and first preloading band 114.

First preloading band 114 and second preloading band 116 are made from low-weight, high-strength materials (or materials with high strength-to-weight ratios). Example materials include fibers like para-aramid fibers (Kevlar), aramid fibers, carbon fibers (including fire-resistant carbon fibers), nylon fibers, fiberglass (including High Strength High Temperature (HSHT) Fiberglass) and other similar fibers. Combinations of high strength-to-weight ratio materials can also be used to create first preloading band 114 and second preloading band 116. These high strength-to-weight ratio materials may also be combined or layered with a composite material like micro carbon fiber filled nylon material (for example, Onyx ^{™} and fire-resistant Onyx ^{™} produced by Markoforged), polyetherimide (for example, ULTEM^{™} 9085 filament produced by Markoforged), or other appropriate polymers.

First preloading band 114 and second preloading band 116 can also be added to impeller 112 by placing first preloading band 114 and second preloading band into first pocket 148 and second pocket 152, respectively. For example, rotor 112 can be made through machining, casting, or additive manufacturing using lightweight metal (like aluminum). Then rotor 112 can be cooled to allow the metal to contract, if necessary. This step may not be necessary depending on the amount of elastic force required to keep blade tips 142 from deflecting axially. Next, first preloading band 114 and second preloading band can be fit around first annular protrusion 146 and second annular protrusion 150, respectively. First preloading band 114 and second preloading band 116 can be added to impeller 112 by additive manufacturing. For example, rotor 112 can be made through machining, casting, or additive manufacturing using lightweight metal (like aluminum). Then, first preloading band 114 and second preloading band 116 can be additively manufactured into first pocket 148 and second pocket 152, respectively. Alternatively, rotor 112 can be additively manufactured with first preloading band 114 and second preloading band 116.

First preloading band 114 and second preloading band 116 reduce and/or eliminate axial deflections in blade tips 142. Clearance between shroud 120 and impeller 112 can be reduced without axial blade deflections, which increases the performance of rotary machine 110. First preloading band 114 and second preloading band 116 stabilize the geometry of impeller 112 while rotary machine 110 is in operation because first preloading band 114 and second preloading band 116 counteract centrifugal forces working on impeller 112. Having a more stable rotor geometry increases the reliability of impeller 112 and rotary machine 110.

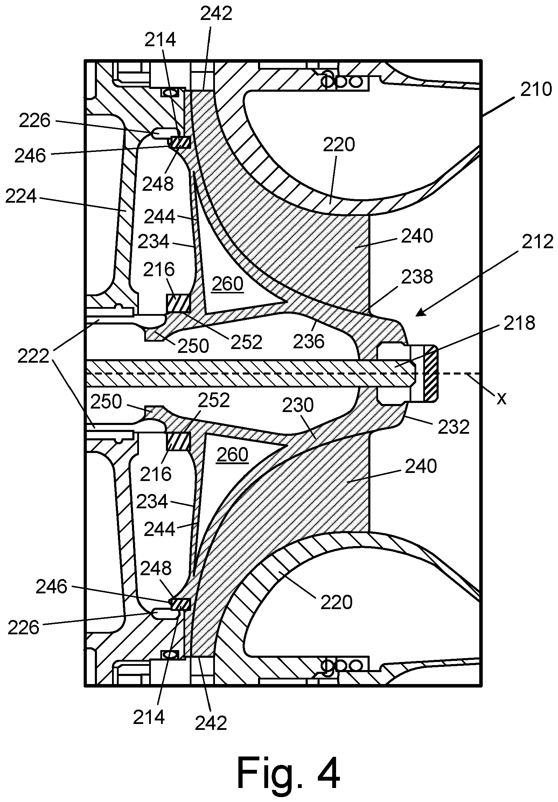

FIG. 4 is a cut away cross-sectional view of rotary machine 210 with impeller 212 having hollow 260 in hub 230. Rotary machine 210 also includes shaft 218, shroud 220, tie rod 222, housing 224, and journal bearing 226. Impeller 212 includes hub 230 with first side 232, second side 234, radially inner surface 236, and radially outer surface 238. Impeller 212 also includes blades 240 with blade tips 242. Hub includes impeller disk 244, first annular protrusion 246 with first pocket 248, second annular protrusion 250 with second pocket 252, and hollow 260. FIG. 4 also includes axis X.

Rotary machine 210 in FIG. 4 has the same structure and function as rotary machine 210 in FIG. 3 with respect to shaft 218, tie rod 222, housing 224, and journal bearing 226. Impeller 212 in FIG. 4 has the same structure and function as impeller 212 with respect to first preloading band 214; second preloading band 216; hub 230 with first side 232, second side 234, radially inner surface 236, and radially outer surface 238; blades 240 with blade tips 242; impeller disk 244; first annular protrusion 246 with first pocket 248; and second annular protrusion 250 with second pocket 252.

Impeller 212 in FIG. 4 also includes hollow 260 in hub 230. Hollow 260 is a triangular shape between radially inner surface 236, radially outer surface 238, and impeller disk 244. Hollow 260 can be shaped differently depending on the weight reduction and structural support needs of hub 230. Impeller 212 can be manufactured with hollow 260 by using reductive manufacturing techniques on a cast or molded impeller 212. Hollow 260 can also be included in hub 230 when additively manufacturing impeller 212.

Hollow 260 in hub 230 reduces the overall weight of impeller 212. Hollow 260 is possible in hub 230 because first preloading band 214 and second preloading band 216 combined with impeller disk 244 give impeller 212 enough structural support to counteract centrifugal forces acting on blade tips 242 when impeller 212 rotates. As discussed in relation to FIG. 2, the metal in hub 230 is typically necessary to structurally support impeller 212 to reduce axial deflections in blade tips 242. However, adding first preloading band 214 on first annular protrusion 246 and second preloading band 216 on second annular protrusion 250 allows for enough elastic force on impeller disk 244 to reduce axial deflections in blade tips 242 that a full-metal hub 230 is not necessary.

Reducing the overall weight of impeller 212 by including hollow 260 in hub 230 reduces the need for containment around impeller 212. As such, shroud 220 in FIG. 4 is shown as thinner as compared to shroud 220 in FIG. 3. Shroud 220 is typically necessary for containing broken pieces of impeller 212 from flying out of rotary machine 210. However, the amount of containment necessary depends on the weight of the piece being contained. Impeller 212 in FIG. 4 has hollow 260 and is lighter than impeller 212 in FIG. 3, so shroud 220 in FIG. 4 is thinner than shroud 220 in FIG. 3. Hollow 260 makes impeller 212 lighter and allows shroud 220 to be lighter, reducing the overall weight of rotary machine 210 in FIG. 4.

Rotary machine 210 has many of the same benefits as rotary machine 210 discussed in relation to FIG. 3. For example, first preloading band 214 and second preloading band 216 reduce and/or eliminate axial deflections in blade tips 242. Further, clearance between shroud 220 and impeller 212 is reduced without the axial deflections, which increases the performance of rotary machine 210. First preloading band 214 and second preloading band 216 stabilize the geometry of impeller 212 while rotary machine 210 is in operation because first preloading band 214 and second preloading band 216 counteract centrifugal forces working on impeller 212. Having a more stable rotor geometry increases the reliability of impeller 212 and rotary machine 210.

### Discussion of Possible Embodiments

The following are non-exclusive descriptions of possible embodiments of the present invention.

An impeller includes a hub. The hub has a first end and a second end and includes an impeller disk at the second end of the hub. The impeller disk includes a first annular protrusion extending from the impeller disk. A first pocket is in a radially outer side of the first annular protrusion. The impeller also includes a first preloading band positioned in the first pocket. The first preloading band encircles the radially outer side of the first annular protrusion. The impeller also includes blades connecting to a radially outer surface of the hub.

The impeller of the preceding paragraph can optionally include, additionally and/or alternatively, any one or more of the following features, configurations and/or additional components:

A further embodiment of the foregoing impeller, first annular protrusion is near a radially outer portion of the impeller disk.

A further embodiment of any of the foregoing impellers, wherein the first annular protrusion is near a radially inner portion of the impeller disk.

A further embodiment of any of the foregoing impellers, wherein the first preloading band is made from a material chosen from the group consisting of para-aramid fibers, aramid fibers, carbon fibers, nylon fibers, fiberglass, micro carbon fiber filled nylon material, polyetherimide, and combinations thereof.

A further embodiment of any of the foregoing impellers, wherein the hub is hollow between the impeller disk, the radially outer surface of the hub, and a radially inner surface of the hub.

A further embodiment of any of the foregoing impellers, and further including a second annular protrusion extending from the impeller disk and a second pocket in the radially outer side of the second annular protrusion. The first annular protrusion can be near a radially outer portion of the impeller disk. The second annular protrusion can be near a radially inner portion of the impeller disk.

A further embodiment of any of the foregoing impellers, and further including a second preloading band positioned in the second pocket and encircling the radially outer side of the second annular protrusion.

A further embodiment of any of the foregoing impellers, wherein the first preloading band and the second preloading band are made from a material chosen from the group consisting of para-aramid fibers, aramid fibers, carbon fibers, nylon fibers, fiberglass, micro carbon fiber filled nylon material, polyetherimide, and combinations thereof.

A further embodiment of any of the foregoing impellers, wherein the first pocket has a rectangular cross-section and is located adjacent to the impeller disk, and wherein the second pocket has a rectangular cross-section and is located adjacent to the impeller disk.

A further embodiment of any of the foregoing impellers, wherein the hub is hollow between the impeller disk, the radially outer surface of the hub, and a radially inner surface of the hub.

A rotary machine includes a housing, an impeller, a shroud, and a shaft. The housing includes an inlet, an outlet, and a duct connecting the inlet and the outlet. The impeller is within the duct. The impeller includes a hub, a first preloading band, and blades. The hub includes a first end and a second end. The hub includes an impeller disk at the second end of the hub. The impeller disk has a first annular protrusion extending from the impeller disk and a first pocket in a radially outer side of the first annular protrusion. The first preloading band is positioned in the first pocket and encircling the radially outer side of the first annular protrusion. The blades connected to a radially outer surface of the hub. The shroud is between the impeller and the housing. The shaft attaches to the impeller at the first end of the hub. The impeller rotates with the shaft.

The rotary machine of the preceding paragraph can optionally include, additionally and/or alternatively, any one or more of the following features, configurations and/or additional components:

A further embodiment of the foregoing rotary machine, wherein the impeller disk further includes a second annular protrusion extending from the impeller disk and a second pocket in the radially outer side of the second annular protrusion. The first annular protrusion is near a radially outer portion of the impeller disk. The second annular protrusion is near a radially inner portion of the impeller disk.

A further embodiment of any of the foregoing rotary machines, wherein the impeller further includes a second preloading band positioned in the second pocket and encircling the radially outer side of the second annular protrusion.

A further embodiment of any of the foregoing rotary machines, wherein the first preloading band and the second preloading band are made from a material chosen from the group consisting of para-aramid fibers, aramid fibers, carbon fibers, nylon fibers, fiberglass, micro carbon fiber filled nylon material, polyetherimide, and combinations thereof.

A further embodiment of any of the foregoing rotary machines, wherein the rotary machines further include a tie rod coaxial with the shaft that rotates with the impeller and the shaft and a journal bearing between the impeller and the housing.

A further embodiment of any of the foregoing rotary machines, wherein the second annular protrusion attaches to the tie rod.

A further embodiment of any of the foregoing rotary machines, wherein the first annular protrusion is adjacent to the journal bearing.

A further embodiment of any of the foregoing rotary machines, wherein the first pocket has a rectangular cross-section and is located adjacent to the impeller disk, and wherein the second pocket has a rectangular cross-section and is located adjacent to the impeller disk.

A further embodiment of any of the foregoing rotary machines, wherein the hub is hollow between the impeller disk, the radially outer surface of the hub, and a radially inner surface of the hub.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An impeller (112) comprising:
a hub (130) with a first end and a second end, the hub comprising:
an impeller disk (144) at the second end of the hub, the impeller disk comprising:
a first annular protrusion (146) extending from the impeller disk; and
a first pocket (148) in a radially outer side of the first annular protrusion;
a first preloading band (114) positioned in the first pocket (148) and encircling the radially outer side of the first annular protrusion (146); and
blades (140) connected to a radially outer surface of the hub (130).

2. The impeller of claim 1, wherein the first annular protrusion (146) is near a radially outer portion of the impeller disk.

3. The impeller of claim 1, wherein the first annular protrusion (146) is near a radially inner portion of the impeller disk.

4. The impeller of any preceding claim, wherein the first preloading band (114) is made from a material chosen from the group consisting of para-aramid fibers, aramid fibers, carbon fibers, nylon fibers, fiberglass, micro carbon fiber filled nylon material, polyetherimide, and combinations thereof.

5. The impeller of any preceding claim, wherein the hub (130) is hollow between the impeller disk (144), the radially outer surface of the hub, and a radially inner surface of the hub.

6. The impeller of any preceding claim, wherein the impeller disk (144) further comprises:
a second annular protrusion (150) extending from the impeller disk (144); and
a second pocket (152) in the radially outer side of the second annular protrusion;
wherein the first annular protrusion (146) is near a radially outer portion of the impeller disk; and
wherein the second annular protrusion (150) is near a radially inner portion of the impeller disk.

7. The impeller of claim 6, and further comprising:
a second preloading band (118) positioned in the second pocket (152) and encircling the radially outer side of the second annular protrusion (150).

8. The impeller of claim 7, wherein the first preloading band (114) and the second preloading band (118) are made from a material chosen from the group consisting of para-aramid fibers, aramid fibers, carbon fibers, nylon fibers, fiberglass, micro carbon fiber filled nylon material, polyetherimide, and combinations thereof.

9. The impeller of claim 6, wherein the first pocket (148) has a rectangular cross-section and is located adjacent to the impeller disk, and wherein the second pocket (152) has a rectangular cross-section and is located adjacent to the impeller disk.

10. The impeller of claim 6, wherein the hub (130) is hollow between the impeller disk, the radially outer surface of the hub, and a radially inner surface of the hub.

11. A rotary machine (110) comprising:
a housing (124) comprising:
an inlet;
an outlet; and
a duct connecting the inlet to the outlet;
an impeller (112) within the duct in the housing, the impeller comprising the impeller of any preceding claim;
a shroud (120) between the impeller and the housing; and
a shaft (118) attached to the impeller at the first end of the hub, wherein the impeller rotates with the shaft.

12. The rotary machine of claim 11, wherein the rotary machine (110) further comprises:
a tie rod (122) coaxial with the shaft that rotates with the impeller and the shaft; and
a journal bearing (126) between the impeller and the housing.

13. The rotary machine of claim 12, when dependent on claim 6, wherein the second annular protrusion (150) attaches to the tie rod (122).

14. The rotary machine of claim 12, wherein the first annular protrusion (146) is adjacent to the journal bearing (126).
